# EUROPEAN PATENT APPLICATION

(11) **EP 2 000 798 A2**
(43) Date of publication of application: **10.12.2008**
(21) Application number: 08157320.6
(22) Date of filing: 30.05.2008
(51) Int. Cl.: G01N 27/87

(54) **Device and method for non-destructive inspection of elongated objects made of magnetic material such as a metallic rope**

(30) Priority: 04.06.2007 IT TO20070385
(71) Applicant: Politecnico di Torino, 10129 Turin (IT)
(72) Inventor: Canova, Aldo, I-10129, Torino (IT); Dalla Chiara, Bruno, I-10129, Torino (IT); Imbimbo, Nicola, I-10129, Torino (IT); Vallan, Alberto, I-10129, Torino (IT); Vusini, Bruno, I-10129, Torino (IT)
(74) Representative: Marchitelli, Mauro

(57) **Abstract**

A device (10) for non-destructive inspection of elongated objects made of magnetic material such as metallic ropes, the device (10) including:
- a plurality of lateral yokes (12) including magnetic material, interconnected with each other, constituting an internal chamber where the elongated object (32) is intended to move longitudinally.

The lateral yokes (12) support elements (23a, 23b) for generating a plurality of magnetic circuits between each lateral yokes (12) and the elongated object (32).

First magnetic field sensor (21) are associated with the lateral yokes (12) to detect a first parameter (LMV) representative of the axial magnetic flux (Φ4) coming from the elongated object (32) and passing through said lateral yokes (12).

Second magnetic sensor elements (40) are located in an intermediate region (26) of said internal chamber to detect a second parameter (LF).

The device (10) also includes a control unit (41) associated with the first magnetic field sensors (21) and the second magnetic field sensors (40) and provided for determining a third parameter (Δx), indicative of a length of a defect in said elongated object (32) and determining a fourth parameter (LMA) indicative of the missing cross section of the elongated object (32) corresponding to said defect length on the basis of said first and third parameter (LMV, Δx).

## Description

The present invention refers to a device and method for non-destructive inspection of elongated objects made of magnetic material such as metallic ropes.

It is now widely disseminated the use of metallic ropes which operate as carriers in civil structures or buildings, lifts, public transport systems, cableways, etc..

Under working conditions such metallic ropes are subjected to a continuous wear due to weather, chemicals and fatigue phenomena associated with the operation of the plant.

Consequently it is necessary to verify, with high frequency and without direct interpretation of the signal by an expert, the state of traction, which is indispensable for the proper functioning of the whole plant. Therefore, there is the need to achieve a reliable and digital monitoring system, and so automatic, of the rope in operation.

In the technique there are known devices and non-destructive methods to inspect metallic ropes, through a magneto-inductive control system, provided by an instrument called magnetoscope which makes it possible to locate a discontinuity possibly present in the ropes, through the measurement of flow variations of a uniform magnetic field (generated by coils or by permanent magnets) caused by the discontinuity. These variations of flow generate on a coil (measure coil) an induced electromotive force, whose behaviour diagram can be stored on special tapes belonging to the instrument. A deep analysis and the interpretation of the behaviour diagrams allows to evaluate the nature of the defects in the rope and their location.

More specifically, this invention relates to a device according to the preamble of claim 1 and a to a method according to the preamble of claim 10.

A disadvantage of a method and a device of the type mentioned above is that it supplies only a first and a second parameter which respectively are indicative of the loss of the volume of metal rope and the dispersion of magnetic flux located around the rope. Through these devices and methods it is not possible to obtain an output parameter indicative of the loss of metallic section of rope, which is an index of the seriousness of the defect in the rope.

One purpose of this invention is to provide a device and a method which solve this problem of the prior art, and having, at the same time, a precise and reliable operation.

Another drawback is that during normal operation the rope can swing inside the device. This movement causes changes in the detected signal due to the changes of reluctance of the magnetic flux path.

Another purpose of the invention is to provide a device and a method that solve this problem by reducing oscillations of the metallic ropes during the inspection and mitigating the effects of disturbances arising out of such oscillations.

These and other purposes are achieved in accordance with this invention by a device and a method of the type specified above, and respectively defined by the characterizing part of the annexed claims 1 and 10.

Additional features and advantages of the invention will become clear from the detailed description that follows, given purely by way of non-limitative example, with reference to the accompanying drawings, in which:
Figure 1 is a perspective view of an embodiment of a device for the non-destructive inspection of metallic ropes according the present invention;
Figure 2 is a perspective exploded view of the device shown in Figure 1;
Figure 3 is a perspective view of the device shown in the previous figures, here shown in an open condition and without internal bushings;
Figure 4 is a perspective view of an half shell of the device shown in Figures 1 and 2;
Figure 5 is a perspective view of a portion of an intermediate bush suitable to be assembled inside the device of the previous figures;
Figure 6 is a schematic view of two of the four magnetic circuits generated under working conditions by the device shown in the previous figures;
Figure 7 is a schematic explanatory view of the magnetic flux travelling in the metallic rope during use of the device according to the previous figures, and
Figure 8 is a block diagram that shows the operation of a control unit associated with the device according to the invention.

In the detailed description that follows terms or phrases as "axial" or "axially" and "radial" or "radially" are referred to the longitudinal axis XX of the device 10.

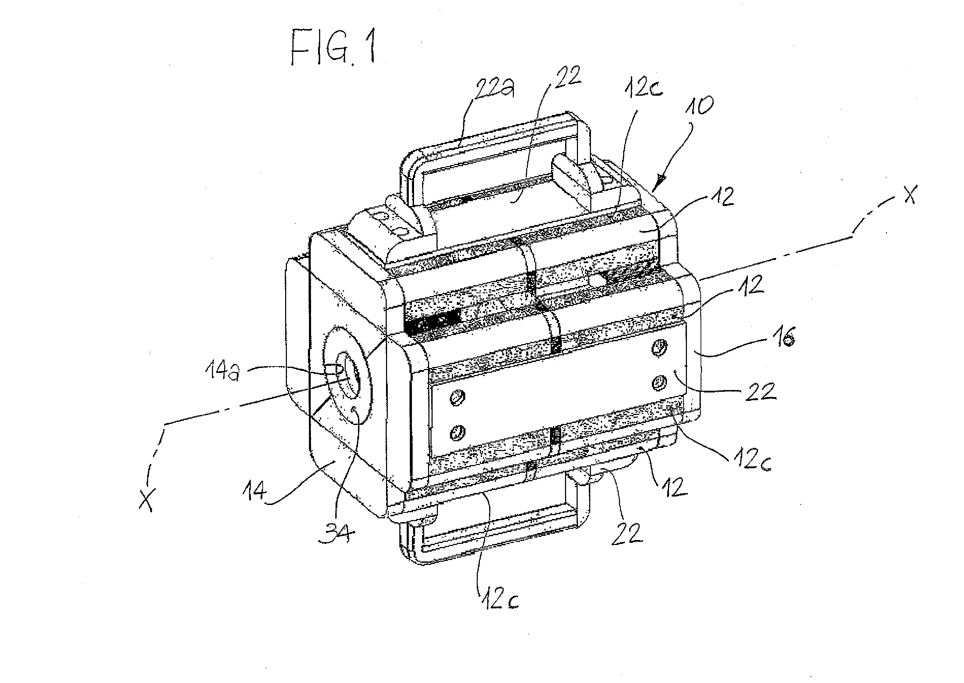

In Figures 1 to 4 it is indicated by 10 a preferred embodiment, in accordance with this invention, of a device for the non-destructive inspection of elongated objects made of magnetic material, such as a metallic rope. As will be clear to a person skilled in the art, the device 10 can be used not only for inspection of metallic ropes, but its scope can be extended to any other element of elongated shape of magnetic material.

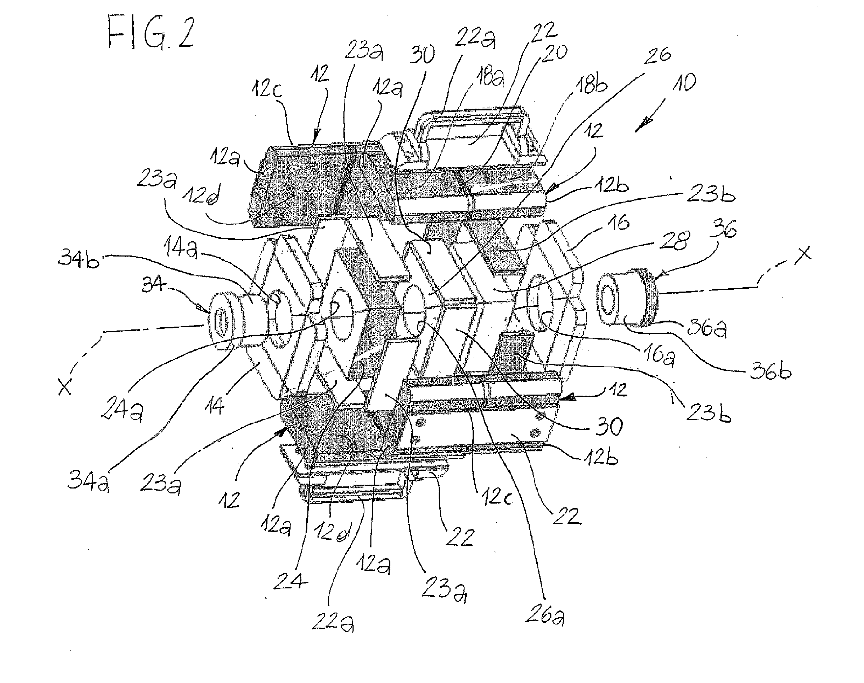

Referring in particular to the perspective views of Figures 1 and 2, this device 10 includes four side yokes 12 made of magnetic material that are permanently interconnected at their frontal ends 12a and their rear ends 12b respectively through a frontal plate 14 and a rear plate 16 manufactured by non-magnetic material. The frontal plate 14 and the rear plate 16 are centrally provided with a frontal opening 14a and a rear opening 16a, respectively, for entry and exit of a metallic rope in or from the device 10.

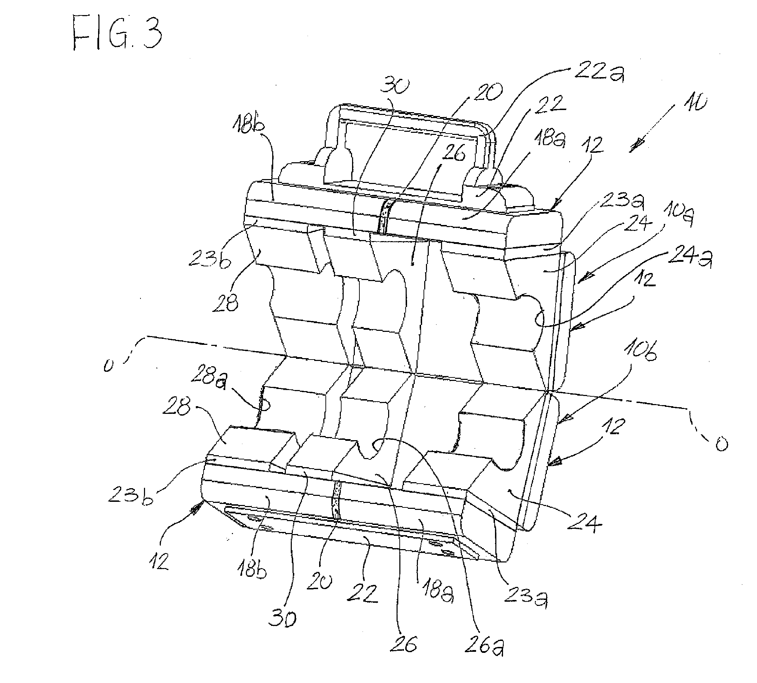

Referring in particular to Figures 2 and 3, each lateral magnetic yoke 12 includes a frontal half-yoke 18a and a rear half-yoke 18b, between which there is placed an intermediate sensor group 20 including first magnetic field sensors 21, advantageously of Hall effect type.

In Figures 1 and 2 can be seen that, on the one hand, at the dorsal or external face 12c of each lateral yoke 12, the frontal half-yoke 18a and the associated rear half-yoke 18b are permanently connected by dorsal or external plates 22 , for example by screws (not shown).

On the other hand, at ventral or internal face 12d of each lateral yoke 12, each frontal half-yoke 18a is coupled in the frontal part with a first slab permanent magnet 23a and the rear half-yoke 18b is coupled in the rear part with a second slab permanent magnet 23b. In this way the same structure is replicated on all four sides of the device 10.

Preferably, on two opposite sides of the device 10, the external plates 22 is provided with holding portions in the form of handles 22a.

Referring in particular to figures 2 to 4, one can appreciate that in an internal chamber (not numbered) of device 10, defined and enclosed by lateral yokes 12, there are inserted a frontal block 24, an intermediate block 26 and a rear block 28 .

The frontal block 24 and rear block 28 are advantageously made of magnetic material, while the intermediate block 26 is preferably made of non-magnetic material.

The three blocks 24, 26 and 28 are coupled with the internal faces 12d of the lateral yokes 12 and are advantageously made in the same size.

For the frontal block 24 and the rear block 28 respectively this coupling occurs through attachment to the first and second magnets 23a and 23b associated with each of the four lateral yokes 12.

For the intermediate block 26, the fastening on the lateral yokes 12 is advantageously carryied out by intermediate strips 30 made of rigid non-magnetic material.

The intermediate strips 30 are connected to the rear half-yoke 18b (alternatively they could also be linked to the frontal semi-yoke 18a) near the intermediate sensor group 20.

The front block 24, the intermediate block 26 and the rear block 28 present in their central portions respectively a front passing hole 24a, an intermediate passing hole 26a and a rear passing hole 28a.

When the device 10 is assembled, the front opening 14a, the front hole 24a, the intermediate hole 26a, the rear hole 28a and the rear opening 16a present a circular cross section and are aligned to a longitudinal axis XX.

As clearly visible in Figure 3, the device 10 forms a first and a second half-shell 10a and 10b divided by an oblique plan and hinged with each other around an axis OO.

Consequently, the frontal plate 14, the frontal block 24, the intermediate block 26, the rear block 28 and the rear plate 16 are diagonally interrupted by that oblique plan and hinged around the axis OO in correspondence with their respective corners aligned with each other.

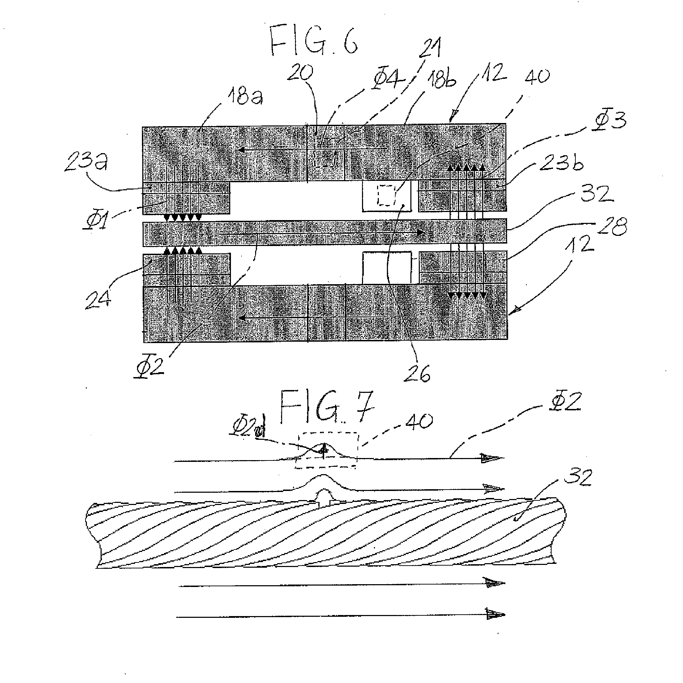

In this way, the device 10 may be opened to accommodate within it an elongated element of magnetic material, in this case a wire rope 32 (Figures 6 and 7).

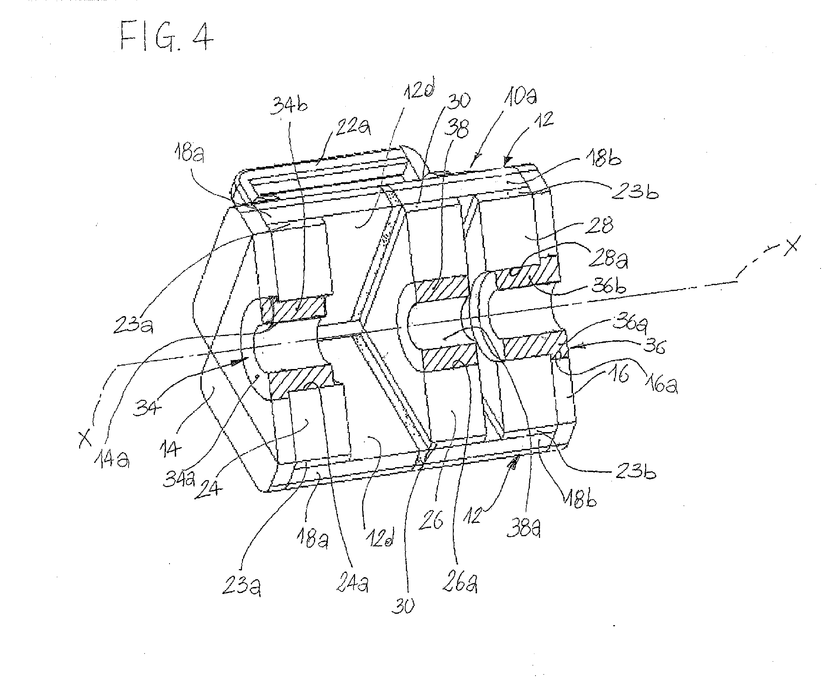

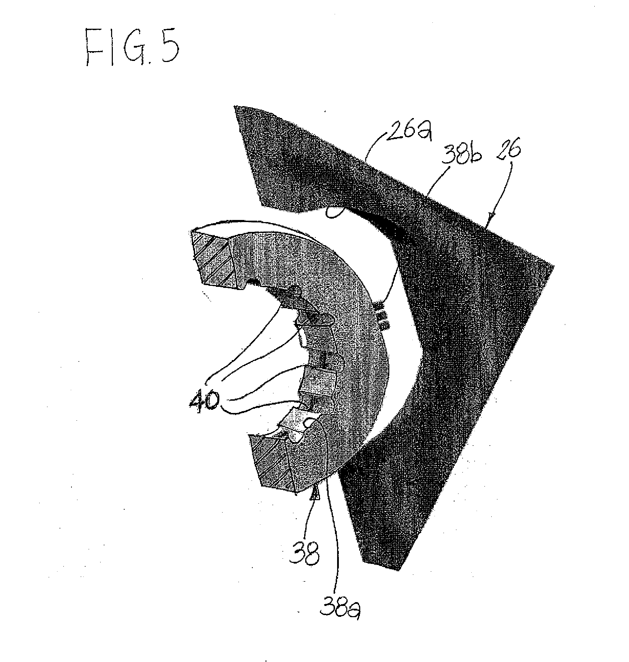

Referring in particular to Figures 4 and 5, a frontal bush 34 of cylindrical cross-section, having an enlarged section 34a and a restricted section 34b, lies in the frontal opening 14a and in the frontal hole 24a.

Similarly, a rear bush 36, having an enlarged section 36a and a restricted section 36b, lies in the rear opening 16a and the real hole 28a.

As schematically shown in Fig. 5, and intermediate cylindrical bush 38 made of non-magnetic material (e.g. plastic) lies in an intermediate hole 26a. A set of second magnetic field sensors, advantageously based on Hall effect, are circumferentially placed on the internal surface of the intermediate cylindrical bush 38.

As will be clear to a person skilled in the art, first and second magnetic field sensors 21 and 40 may also be different, such as electromagnetic sensors with coils or equivalent.

The intermediate bush 38 is connected with a control unit (not shown) associated with the device 10 through connectors 38b projecting externally and coupled to their relative socket (not shown) in the intermediate block 26.

As will be clear to a person skilled in the art, the particular structure of the device 10 allows to receive a plurality of frontal bushes 34, a plurality of rear bushes 36 and a plurality of intermediate bushes 38, with respective different internal diameters.

Therefore, it is possible to select the appropriate frontal and rear bush 34 and 36 with the inner diameter suitable to reduce, as much as possible, the air gap between metallic ropes 32 of different diameter and the frontal and rear bushes 34 and 36.

Similarly, the choice of the intermediate bush 26 is finalised to reduce the distance between the set of second magnetic field sensors 40 and the metallic rope 32. In this way, the first and second magnetic field sensors 21 and 40 allow to obtain measurements more reliable and accurate.

In the illustrated embodiment, the bushes 34, 36 and 38 have the shape of a cylindrical hole and in Figures 4 and 5 are shown cut along a longitudinal plane.

In a further variant of implementation, the bushes 34, 36 and 38 may also be implemented in a single monolithic piece, for example by moulding the intermediate bush 38 on the frontal bush 34 and the rear bush 36.

However, in other embodiments (not shown), each of these bushes 34, 36 and 38 can be made in the form of a pair of half-bushes suitable for coupling to each of the half shells 10a and 10b.

With reference to figures from 6 to 9, will now be illustrated the principle of operation of the device 10. In Figure 6 are schematically illustrated two of the four magnetic circuits made from the device 10 through the lateral magnetic yokes 12, where the arrows indicate the path of the magnetic flux.

It is now described the contribution in terms of magnetic flux of a magnetic circuit generated in the device 10 in presence of the metallic rope 32.

It is possible to see that initially a first magnetic flux Φ1 exits radially from a first permanent magnet 23a and enters in the part of the metallic rope 32 located at the frontal block 24. Subsequently, a second magnetic flux Φ2 axially flows through the metallic rope 32 in order to reach the magnetic saturation.

Then the third magnetic flux Φ3 exits radially from the part of the metallic rope 32 which is located at the rear block 28 and enters in the corresponding second permanent magnet 23b.

Then the fourth magnetic flux Φ4 exits from the second permanent magnet 23b, enters into the lateral magnetic yoke 12, which is axially crossed to close the magnetic circuit on the second permanent magnet 23a.

For each of the four sides of the device 10, identified by each lateral yoke 12, occurs the same situation in terms of magnetic flux.

The magnetic flux Φ4 is indicative of the volume of metallic rope 32 which flows through the device 10 in the section between the frontal block 24 and the rear block 28.

Consequently, the measures provided by the first magnetic field sensors 21, located in the intermediate sensor group 20 of each lateral yoke 12, leads to a measurement of a first parameter called LMV (Loss of Metallic Volume), i.e. through a direct detection of rope volume.

Preferably, to obtain a more precise measure of the first parameter LMV, it is calculated an average value of the field measurements obtained by each of the intermediate sensor groups 20 of the individual lateral yokes 12. In this way it is possible to mitigate the effects of eventual disturbs due to possible fluctuations of the metallic rope 32 in the internal chamber of the device 10.

As more clearly shown in Figure 7, the second magnetic field sensors 40 circumferentially located near the metallic rope 32 are predisposed to measure - at the intermediate block 26 - a leakage component of the second magnetic flux Φ2. The leakage component is indicative of small defects (e.g. broken wire) located in the cross section of the metallic rope 32 when passing through the intermediate block 26.

Therefore, the second magnetic field sensors 40 allow a measurement of a second parameter LF (Localized Fault) for the entire length of metallic rope that runs inside the device 10 during the inspection.

As in the case of the first parameter LMV, the second parameter LF is the average value on the measurement set obtained from each of the second magnetic field sensors 40 of the intermediate bush 38.

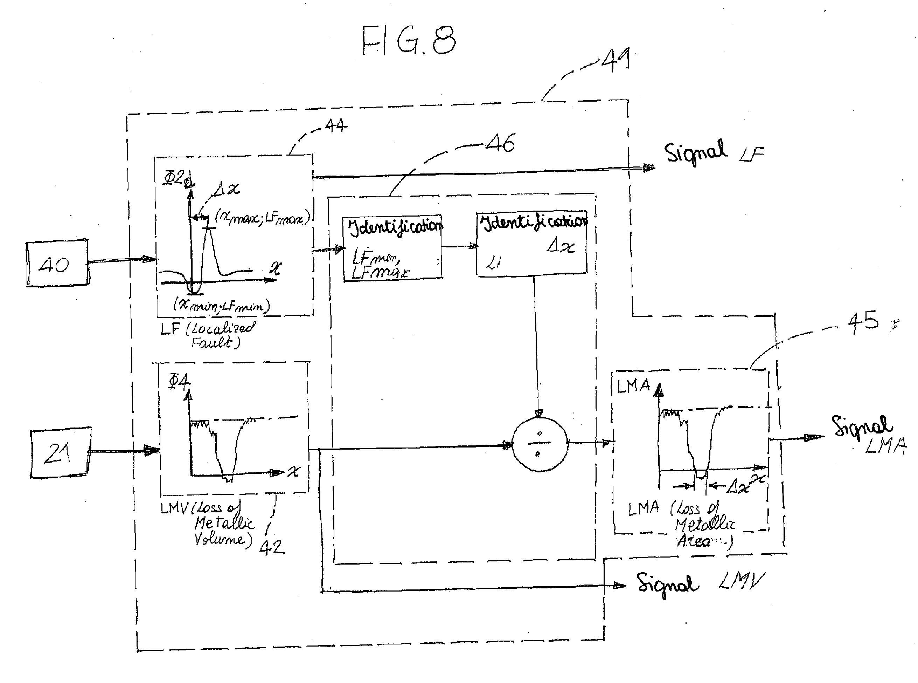

The methodology for the defect detection on the basis of data received from the first and second magnetic field sensors 21 and 40 will be described below with reference to the figure 8, which is a block diagram of the control unit 41.

The control unit 41 includes a first, a second, a third memory 42, 44, 45 and a processing unit 46. During the axial moviment of the metallic rope 32 in the device 10, the control unit 41, which may be included in or linked to the device 10, receives, at predetermined intervals, signals related to the parameters LMV and LF, respectively generated by the first and second magnetic field sensors 21 and 40.

The behaviour of the parameters LMV and LF are stored according to the position of the metallic rope 32 enclosed by the device 10, respectively in the first and second memory 42, 44 of the control unit 41.

The processing unit 46 receives data of the second parameter LF stored by the second memory 44, identifying the relative minimum (xmin, LFmin) and the relative maximum (xmax, LFmax) of the leakage magnetic field component, where xmin and xmax represent a first and a second point on the metallic rope 32, which are associated respectively to the values LFmin and LFmax.

In this way, the processing unit 46 determines a third parameter Δx, indicative of the length of the defect in the metallic rope 32. Preferably, this third parameter Δx is obtained in proportion to the distance between xmax and xmin.

The processing unit 46 receives data of the first parameter LMV stored by the first memory 42 and processes them according to the third parameter Δx, so as to obtain an output signal called LMA (Loss of Metallic Area), representative of the missing cross section of metallic rope 32.

For example, data from the first parameter LMV, in the part of the metallic rope where is detected the presence of a defect, are divided by the third parameter Δx. The data of developments in the fourth parameter LMA generated in this way are stored in the third memory 45.

Finally, the control unit 41 provides the signals LF, LMV and LMA, obtained as described above, to additional external devices, not shown, (for example for display on a video or paper).

## Claims

1. Device (10) for non-destructive inspection of elongated objects made of magnetic material such as metallic ropes, the device (10) including:
- a plurality of lateral yokes (12) including magnetic material, interconnected with each other, constituting an internal chamber where the elongated object (32) is intended to move longitudinally, and supporting:
- elements (23a, 23b) for generating a plurality of magnetic circuits between each lateral yokes (12) and the elongated object (32);
- first magnetic field sensor (21) associated with the lateral yokes (12) and adapted to detect at predetermined intervals during the longitudinal movement of the elongated object (32) the behaviour of a first parameter (LMV) representative of the axial magnetic flux (Φ4) coming from the elongated object (32) and passing through said lateral yokes (12); said first parameter (LMV) being indicative of the loss of metallic volume of the part of the elongated object (32) passing through said internal chamber;
- second magnetic sensor elements (40) located in an intermediate region (26) of said internal chamber and adapted to detect at predetermined intervals during the movement of the elongated object (32) the behaviour of a second parameter (LF), representative of localized leakage of magnetic flux around the elongated object (32) in correspondence with said intermediate region (26); said second parameter (LF) being indicative of the presence of a defect in a part of the elongated object (32) passing through said intermediate region (26);
the device (10) being **characterized in that** it also includes:
- a control unit (41) associated with the first magnetic field sensors (21) and the second magnetic field sensors (40) and provided for:
receiving from the first magnetic field sensors (21) and the second magnetic field sensors (40) the signals indicative of the first and second parameter (LMV, LF);
determining a third parameter (Δx), indicative of a length of a defect in said elongated object (32), which depends from the behaviour of said second parameter (LF), and
determining the behaviour of a fourth parameter (LMA) indicative of the missing cross section of the elongated object (32) corresponding to said defect length on the basis of said first and third parameter (LMV, Δx).

2. Device according to claim 1, in which said control unit (41) is provided to identify a relative minimum (LFmin) and a relative maximum (LFmax) in the behaviour of said second parameter (LF) and determining said third parameter (Δ x) according to said relative minimum and maximum (LFmin, LFmax) of said second parameter (LF).

3. Device according to claim 2, in which said control unit (41) is provided to determine said third parameter (Δx) in proportion to the distance between a first and a second part (xmin, xmax) of the elongated object (32) to which are associated, respectively, said relative minimum and maximum (LFmin, LFmax) of said second parameter (LF).

4. Device according to claim 3, in which said control unit (41) is provided to determine the behaviour of said fourth parameter (LMA) in relation to the average behaviour of said first parameter (LMV) measured in correspondence with each of said first magnetic field sensors (21).

5. Device according any of the previous claims, in which each yoke (12) includes a first and a second half-yoke (18a, 18b) connected by an intermediate sensor group (20) in which the first magnetic field sensors (21) are located.

6. Device according any of the previous claims, including a frontal block (24) and a rear block (28) enclosed by lateral yokes (12) in the internal chamber and adapted to accommodate at least one interchangeable end bush (34 , 36) made of magnetic material, adapted to be crossed by an elongated object (32) respectively in the frontal and the rear part of said device (10) and chosen among a plurality of bushes having different internal diameters, so as to reduce the air gap between the elongated object (32) and said interchangeable end bush (34, 36).

7. Device according to claim 6, in which the frontal block (24) and rear block (28) respectively receive an interchangeable frontal bush (34) and rear bush (36).

8. Device according to any of the previous claims, including an intermediate block (24) enclosed by lateral yokes (12) in the internal chamber and adapted to accommodate at least one interchangeable intermediate bush (38) of non-magnetic material, including said magnetic field sensors (40), adapted to be crossed by an elongated object (32) and chosen among a plurality of bushes having different internal diameters, so as to reduce the distance between the elongated object (32), and said second magnetic field sensors (40).

9. Device according to claim 8 when dependent from claim 6 or 7, in which such intermediate bush (38) and said bush (34, 36) are made in one piece.

10. Method of non-destructive inspection of an elongated object made of magnetic material, such as a metallic rope (32); said method comprising the following operative phases:
a) providing a device (10) with a plurality of lateral yokes (12) made of magnetic material, interconnected with each other and defining an internal chamber;
b) accommodating an elongated object (32) in said internal chamber;
c) generating a plurality of magnetic circuits between each lateral yoke (12) and the elongated object (32);
d) moving longitudinally the elongated object (32) in said internal chamber;
e) measuring during the movement of the elongated object (32) the evolution at predetermined intervals of a first parameter (LMV), said first parameter (LMV) being representative of the axial magnetic flux (Φ4) coming from the elongated object (32) and passing through said lateral yokes (12); said first parameter (LMV) being indicative of the loss of metallic volume of the part of the elongated object (32) passing through said internal chamber.
f) measuring during the movement of the elongated object (32), the evolution at predetermined intervals of a second parameter (LF), said second parameter (LF) being representative of localized leakage magnetic flux around the elongated object (32) corresponding with said intermediate region (26); said second parameter (LF) being indicative of the presence of a defect in a part of the elongated object (32) passing through said intermediate region (26);
the method being **characterized in that** it also includes the following phases:
g) determining a third parameter (Δx) indicative of a length of a defect in said elongated objects (32), which depends from the behaviour of said second parameter (LF); and
h) determining the behaviour of a fourth parameter (LMA) indicative of the missing cross section of the elongated objects (32) corresponding to said defect length on the basis of said first and third parameter (LMV, Δx).

11. Method according to claim 10, in which the operational phase g) includes the following steps:
g1) identifying a relative minimum (LFmin) and a relative maximum (LFmax) in the behaviour of said second parameter (LF); and
g2) determining said third parameter (Δx) according to said relative minimum and relative maximum (LFmin, LFmax) in proportion to the distance between xmax and xmin on the elongated object (32) to which are respectively associated said relative minimum and relative maximum (LFmin, LFmax).

12. Method according to claim 11, in which the operational phase h) includes the operation of determining the behaviour of said fourth parameter (LMA) in relation to the average of the behaviour of said first parameter (LMV) measured in each of the first magnetic field sensors (21).

13. Method according any claims 10 to 12, wherein the operational phase e) includes the operation of determining the behaviour of the first parameter (LMV) by picking the axial magnetic flux (Φ4) passing respectively from a first half-yoke (18a) to a second half-yoke (18b) belonging to each yoke (12)

14. Method according any claims 10 to 13, wherein the operational phase a) includes the following steps:
a1) choosing at least one interchangeable end bush (34, 36) between a plurality of bushes having different internal diameters, said at least one interchangeable end bush (34, 36) being made of magnetic material and being adapted to be crossed by the elongated object (32) respectively in the frontal and the rear part of said device (10) and being selected to reduce the air gap between that elongated object (32) and said at least one interchangeable bush (34, 36);
a2) putting said at least one interchangeable end bush (34, 36) in a frontal block (24) and in a rear block (28) belonging to said device (10) and enclosed laterally by lateral yokes (12);
a3) choosing an interchangeable intermediate bush (38) between a plurality of bushes with internal different diameters; said interchangeable intermediate bush (38) being made of non-magnetic material, including magnetic field sensors (40), being adapted to be crossed by the elongated object (32) and being chosen to reduce the distance between the elongated object (32) and the magnetic field sensors (40); and
a4) putting said interchangeable intermediate bush (38) in an intermediate block (26) belonging to said device (10) and enclosed by lateral yokes (12).
